# EUROPEAN PATENT APPLICATION

(11) **EP 4 513 409 A1**
(43) Date of publication of application: **26.02.2025**
(21) Application number: 23806545.2
(22) Date of filing: 21.02.2023
(51) Int. Cl.: G06Q 20/32, G07B 15/02

(54) **VEHICLE-MOUNTED PAYMENT CONTROL METHOD AND SYSTEM, AND DEVICE AND STORAGE MEDIUM**

(30) Priority: 20.05.2022 CN 202210551502
(71) Applicant: ZTE Corporation, Shenzhen, Guangdong 518057 (CN)
(72) Inventor: LI, Cong, Shenzhen, Guangdong 518057 (CN)
(74) Representative: Savi, Massimiliano
(86) International application number: PCT/CN2023/077427
(87) International publication number: WO 2023/221584

(57) **Abstract**

Disclosed in the present application are a vehicle-mounted payment control method and system, and a device and a storage medium. The vehicle-mounted payment control method is applied to a vehicle-mounted payment control system. The vehicle-mounted payment control method comprises: scanning a surrounding environment to obtain reference picture information (S310); performing recognition processing on the reference picture information, so as to obtain a target payment two-dimensional code (S320); and performing payment processing according to the target payment two-dimensional code and preset user information (S330).

## Description

### CROSS-REFERENCE TO RELATED APPLICATION

This application is based on and claims the priority of Chinese patent application No. 202210551502.8 filed on May 20, 2022, the disclosure of which is incorporated herein by reference in its entirety.

### TECHNICAL FIELD

The present disclosure relates to the field of payment technologies, in particular to a vehicle-mounted payment control method, system, and device, and a storage medium.

### BACKGROUND

With the increase in vehicles, and the development and popularization of vehicle-mounted intelligent systems (especially the Internet of vehicles (IoV) driven by new energy electric vehicles), as well as the widespread application of mobile payment and scanning payment, intelligent shopping, consumption, parking payment and other vehicle-mounted payments are expected to grow rapidly in the future. Because of its flexibility, payment based on a two-dimensional code is widely used in shopping payment. With the popularity of mobile payment and code scanning payment, people's requirements for the convenience of scanning payment are increasingly high. At present, common public parking lots have payment systems based on two-dimensional codes, and others such as KFC drive-through restaurants and car convenience stores also use payment systems based on two-dimensional codes. In daily life, scenarios of making payments based on two-dimensional codes without getting out of vehicles are becoming increasingly common. However, in some cases, a user needs to stop a vehicle, roll down the window or even get off the vehicle, and use a mobile phone to scan a two-dimensional code, and further needs to fill in user information to complete the payment. Such code scanning payment operations are quite inconvenient, inefficient, and tend to cause congestion.

In existing technology, a method based on vehicle and license plate recognition (for example, electronic toll collection (ETC)) is mostly used. According to the method, payment requires a dedicated authorized system. Merchants need to access the system, while users need to install corresponding ETC devices and enable corresponding services. This offers limited flexibility for both parties. Therefore, except for toll collection for expressways or other transportation systems, other scenarios such as parking toll collection rarely use ETC. In corresponding scenarios in daily life, a two-dimensional code produced by a merchant is often used for payment. A user manually scans the code, enters a license plate, and pays the fee. Then the vehicle is identified as paid based on license plate automatic recognition, and a rod is lifted to allow the vehicle to pass through. Alternatively, the user scans the code to pay the fee, and a management person lifts the rod to allow the vehicle to pass through. Alternatively, payment can be made by scanning a two-dimensional code obtained from a cloud based on a location. In this method, the cloud is used and needs to maintain a corresponding relationship between the location and the two-dimensional payment code. Merchants need to join the system, which is not conducive to commercial promotion. Therefore, how to achieve more convenient and practical payment is an urgent problem to be solved.

### SUMMARY

The following is a summary of the subject matters described in detail herein. This summary is not intended to limit the scope of protection of the claims.

Embodiments of the present disclosure provide a vehicle-mounted payment control method, system, and device, and a storage medium.

In accordance with a first aspect of the present disclosure, an embodiment provides a vehicle-mounted payment control method, applied to a vehicle-mounted payment control system, including: scanning a surrounding environment to obtain reference picture information; performing recognition processing on the reference picture information to obtain a target payment two-dimensional code; and performing payment processing according to the target payment two-dimensional code and preset user information.

In accordance with a second aspect of the present disclosure, an embodiment further provides a vehicle-mounted payment control system, including: an information scanning module, configured to scan a surrounding environment to obtain reference picture information; an information recognition module, configured to perform recognition processing on the reference picture information to obtain a target payment two-dimensional code; and a payment module, configured to perform payment processing according to the target payment two-dimensional code and preset user information.

In accordance with a third aspect of the present disclosure, an embodiment further provides a vehicle-mounted payment control device, including: a memory, a processor, and a computer program stored in the memory and executable by the processor, where the computer program, when executed by the processor, causes the processor to implement the vehicle-mounted payment control method of the first aspect.

In accordance with a fourth aspect of the present disclosure, an embodiment further provides a computer-readable storage medium storing computer-executable instructions for performing the vehicle-mounted payment control method described above.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims, and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 is a schematic diagram of functional modules of a vehicle-mounted payment control system according to an embodiment of the present disclosure;
FIG. 2 is a schematic diagram of functional modules obtained based on FIG. 1 according to an embodiment of the present disclosure;
FIG. 3 is a flowchart of a vehicle-mounted control method according to an embodiment of the present disclosure;
FIG. 4 is a flowchart of step S320 in FIG. 3;
FIG. 5 is a flowchart of step S420 in FIG. 4;
FIG. 6 is a flowchart of step S510 in FIG. 5;
FIG. 7 is a flowchart of step S330 in FIG. 3; and
FIG. 8 is a structural schematic diagram of a vehicle-mounted payment control device according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It is to be noted that, in the description of the present disclosure, the meaning of "several" is one or a plurality; the meaning of "a plurality of" is two or more; "greater than", "less than", "more than", etc. are to be construed as excluding a given figure. In addition, although a logical order is shown in the flowcharts, the steps shown or described may be performed, in some cases, in a different order from the order shown or described in the flowcharts. The terms such as "first" and "second" in the description are intended to distinguish between similar objects and are not necessarily to describe a specific order or sequence.

The present disclosure provides a vehicle-mounted payment control method, a vehicle-mounted payment control system, a vehicle-mounted payment control device, and a computer-readable storage medium. According to the schemes of the embodiments of the present disclosure, the vehicle-mounted payment control system scans a surrounding environment to obtain a reference picture information, then performs recognition processing on the reference picture information to determine a target payment two-dimensional code, and performs payment processing according to the target payment two-dimensional code and preset user information. In other words, according to the schemes of the embodiments of the present disclosure, the vehicle-mounted payment control system automatically scans and recognizes the target payment two-dimensional code, and performs the payment processing by using the preset user information automatically filled in, so that a user does not need to manually input the user information, which makes the payment more convenient and practical, and improves user experience.

The embodiments of the present disclosure will be further explained below with reference to the accompanying drawings.

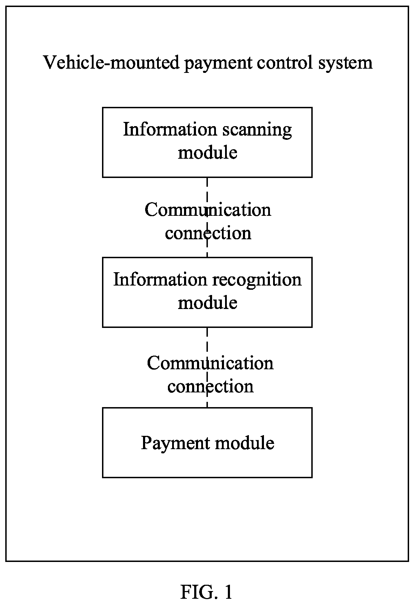

Referring to FIG. 1, FIG. 1 is a schematic diagram of functional modules of a vehicle-mounted payment control system according to an embodiment of the present disclosure. In the example shown in FIG. 1, the vehicle-mounted payment control system includes: an information scanning module, an information recognition module and a payment module, where the information recognition module is communicatively connected to each of the information scanning module and the payment module.

The information scanning module can scan a surrounding environment to obtain reference picture information. After obtaining the reference picture information through scanning, the information scanning module sends the reference picture information to the information recognition module.

The information recognition module can receive the reference picture information sent by the information scanning module, perform recognition processing on the reference picture information to obtain a target payment two-dimensional code, and then send the target payment two-dimensional code to the payment module.

The payment module can receive the target payment two-dimensional code sent by the information recognition module, and then perform payment processing according to the target payment two-dimensional code and preset user information.

According to the vehicle-mounted payment control system according to this embodiment of the present disclosure, when a user drives a vehicle away from a parking lot, a drive-through restaurant, a car convenience store, or a gas station, the user interacts with the vehicle-mounted payment control system without manually inputting user information. The information scanning module scans a surrounding environment to obtain reference picture information, and sends the reference picture information to the information recognition module. When the information recognition module receives the reference picture information, performs recognition processing on the reference picture information to obtain a target payment two-dimensional code, and then sends the target payment two-dimensional code to the payment module. After receiving the target payment two-dimensional code, the payment module scans the target payment two-dimensional code to enter a payment interface, and automatically fills in the preset user information for payment processing. According to the scheme of this embodiment of the present disclosure, the vehicle-mounted payment control system automatically scans and recognizes the target payment two-dimensional code, and performs payment processing by using the preset user information automatically filled in, so that a user does not need to manually input the user information, which makes the payment more convenient and practical, and improves user experience. The use of the system requires neither merchants joining a specific system, nor utilization of a cloud server. The vehicle-mounted payment control system provided by this embodiment of the present disclosure has lower implementation costs, and has wider application scenarios and higher practicability and flexibility.

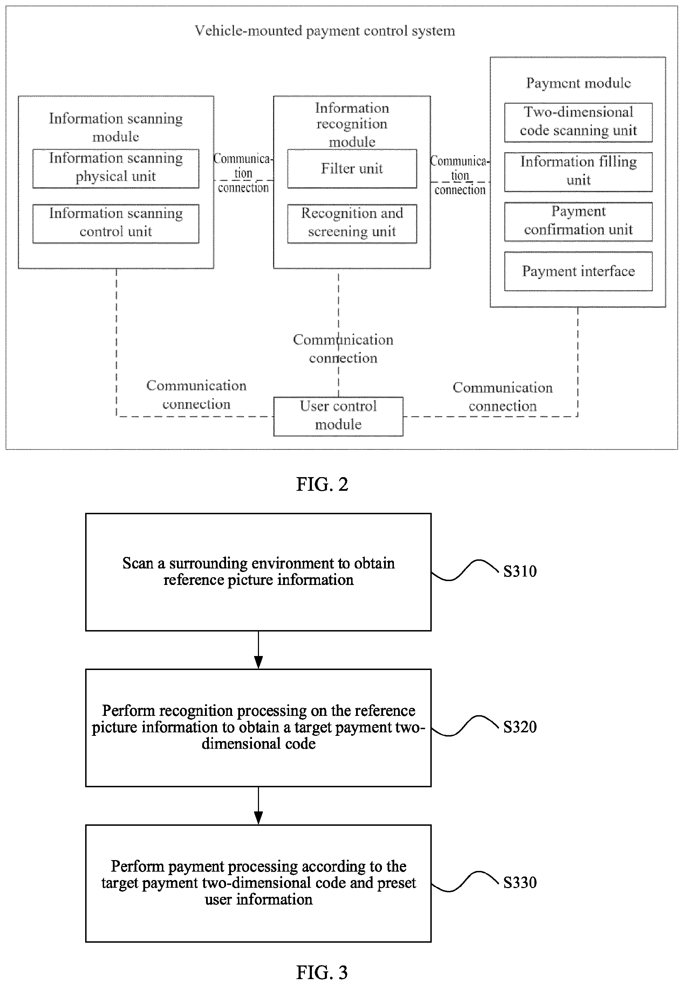

Referring to FIG. 2, FIG. 2 is a schematic diagram of functional modules obtained based on FIG. 1 according to an embodiment of the present disclosure. In the example shown in FIG. 2, the vehicle-mounted payment control system further includes: an information scanning module, an information recognition module, a payment module, and a user control module, where the information recognition module is communicatively connected to each of the information scanning module and the payment module, and the user control module is communicatively connected to each of the information scanning module, the information recognition module, and the payment module. The information scanning module includes an information scanning physical unit and an information scanning control unit, the information recognition module further includes a filter unit and a recognition and screening unit, and the payment module includes a two-dimensional code scanning unit, a payment interface, an information filling unit, and a payment confirmation unit.

When a user drives a vehicle away from a parking lot, a drive-through restaurant, a car convenience store, or a gas station, the vehicle-mounted payment control system automatically scans and recognizes a target payment two-dimensional code, and performs payment processing by using preset user information automatically filled in, so that the user does not need to manually input the user information, which makes the payment more convenient and practical, and improves user experience. In addition, the user control module can further send a payment termination process under the control of the user to terminate the payment processing of the vehicle-mounted payment control system; can further send payment correlated information to the information recognition module under the control of the user to assist the information recognition module in performing recognition processing on reference picture information; and can further send user-corrected information to the payment module under the control of the user to improve information filling in the payment interface. When there is a potential safety hazard in payment, the user can further send a payment confirmation instruction to the payment module through the user control module, to manually perform the payment operation. In some embodiments, the user control module can further send an automatic code scanning payment instruction to the information scanning module under an operation of the user, thereby starting automatic payment processing.

Those having ordinary skill in the art can understand that the user control module may include a function selection display screen, and the user may select an instruction to be sent on the function selection display screen, to implement interaction with the vehicle-mounted payment control system. In addition, the user control module may further include recognition modules such as a gesture recognition module, a voice recognition module, and a fingerprint recognition module, for converting instructions of the user and realizing the interaction between the user and the vehicle-mounted payment control system. Recognition of a specific user can also improve the safety and reliability of the vehicle-mounted payment control system.

The information scanning module may include the information scanning physical unit and the information scanning control unit. First, the information scanning control unit is configured to control the information scanning physical unit to start and work. Under the control of the information scanning control unit, the information scanning physical unit scans a surrounding environment to obtain surrounding environment information, and feeds back the surrounding environment information to the information scanning control unit. The information scanning control unit adjusts the information scanning physical unit according to the surrounding environment information fed back, for example, parameter information such as a scanning angle, a scanning direction, a focus, and a focal length of the information scanning physical unit is adjusted, so that the information scanning physical unit can flexibly acquire reference picture information from the surrounding environment and improve the effectiveness and efficiency of acquiring the reference picture information. The information scanning module may acquire one or more pieces of reference picture information, and the acquired reference picture information includes at least one piece of two-dimensional code information.

It can be understood that the information scanning physical unit may be a vehicle-mounted camera or another vehicle-mounted scanning device having an image acquisition function, which is not specifically limited in the present disclosure, provided that the device can realize a function of reference picture information.

The information recognition module may include the filter unit and the recognition and screening unit. The information recognition module may perform recognition processing on the reference picture information to obtain a target payment two-dimensional code. The recognition and screening unit can receive the reference picture information, and extract the two-dimensional code information and text information closest to the two-dimensional code information in the reference picture information. When there is only one piece of two-dimensional code information extracted from the reference picture information, the filter unit does not work, and the recognition and screening unit continues to perform recognition processing on the extracted sole two-dimensional code information and its corresponding text information, and determines that the sole two-dimensional code information is the target payment two-dimensional code if the sole two-dimensional code information is considered as related to payment after being recognized. When there are a plurality of pieces of extracted two-dimensional code information, the filter unit compares the plurality of pieces of extracted two-dimensional code information, filters out repeated two-dimensional code information and its corresponding text information, and returns filtered two-dimensional code information which does not contain repeated two-dimensional code information to the recognition and screening unit for recognition and screening processing. The recognition and screening unit performs recognition processing on the two-dimensional code information and the text information to determine the target payment two-dimensional code. Specifically, the recognition and screening unit first acquires payment correlated information, obtains a payment correlation degree of the text information according to the payment correlated information and the text information, then according to the payment correlation degree, selects text information which corresponds to the highest payment correlation degree, determines two-dimensional code information corresponding to the text information as a candidate two-dimensional code and acquires a number of candidate two-dimensional codes, and finally determines the number of candidate two-dimensional codes, to be specific, when the number of candidate two-dimensional codes is equal to 1, determines the sole candidate two-dimensional code as the target payment two-dimensional code, or when the number of candidate two-dimensional codes is greater than 1, sends the plurality of candidate two-dimensional codes to the user control module for selection of the user, and then determines the target payment two-dimensional code from among the plurality of candidate two-dimensional codes according to a user selection instruction returned by the user. The recognition and screening unit sends the target payment two-dimensional code to the payment module.

It should be noted that the payment correlated information may be first payment correlated information preset in advance in the recognition and screening unit, or may be second payment correlated information sent by the user control module under the control of the user. Acquiring the preset first payment correlated information by the recognition and screening unit and performing subsequent recognition processing is beneficial to improving the working efficiency of the recognition and screening unit; while obtaining the second payment correlated information sent by the user control module for subsequent recognition processing is beneficial to improving the working flexibility and accuracy of the recognition and screening unit, improving the interaction between the user and the vehicle-mounted payment control system, and improving the user experience. The recognition and screening unit may successively acquire the preset first payment correlated information and the second payment correlated information sent by the user and perform multiple times of recognition processing to make a recognition result more accurate.

It can be understood that the work performed by the filter unit and the recognition and screening unit is in no particular order. The filter unit may alternatively perform filtering processing on the candidate two-dimensional codes after the recognition and screening unit completes all recognition processing, and filter out repeated two-dimensional codes among the candidate two-dimensional codes, so as to determine the target payment two-dimensional code.

The payment module may include the two-dimensional code scanning unit, the information filling unit, and the payment confirmation unit. The two-dimensional code scanning unit is configured to receive the target payment two-dimensional code, scan the target payment two-dimensional code to enter a payment interface corresponding to the target payment two-dimensional code. Then, the information filling unit acquires the preset user information, and fills in the preset user information in the payment interface to improve the payment interface. In the payment interface, the information filled in the payment interface is verified, and when the information in the payment interface is complete and the verification succeeds, the payment confirmation unit automatically confirms the payment processing. In a few cases, when the information in the payment interface is incomplete or part of the information is incorrect, the payment confirmation unit receives an information correction notification sent by the payment interface, and sends the information correction notification to the user control module. Then, the user control module displays the information correction notification to prompt the user to input user-corrected information, and the information filling unit receives the user-corrected information and fills in the user-corrected information in the payment interface. Then, payment processing is performed. It can be understood that if the payment module is configured with a payment display interface, the information correction notification may be directly displayed. The payment module may perform a payment operation after receiving the user-corrected information and a payment confirmation instruction sent by the user through the user control module.

It should be noted that the information filling unit may further store the user-corrected information and update the preset user information so that when a similar application scenario is encountered, updated preset user information can be directly and automatically filled in, so as to improve the efficiency and flexibility of payment processing, maintain convenience, and improve the user experience.

It should be noted that the payment confirmation unit may further be configured with a payment security monitoring function. When a payment amount exceeds a certain number or a two-dimensional code of malicious payment is encountered, the user is prompted to re-confirm the payment, so as to improve the security of the payment.

It can be understood that the payment module in this embodiment of the present disclosure may be integrated into the intelligent integrated vehicle-mounted payment control system as a part of the functional modules to perform payment processing. The payment module may alternatively be configured as an independent payment terminal or payment system in the vehicle-mounted payment control system to perform payment processing. Specifically, the payment module may be implemented as APP software installed on a mobile terminal (such as a mobile phone, a tablet computer, etc.), or a dedicated payment device. Therefore, the present disclosure does not specifically limit the implementation form of the payment module.

It can be understood that the module functions in the embodiments of the present disclosure can also be realized through a master control chip, but the logical relationship involved in realizing the corresponding functions by the master control chip is the same as that of the above-mentioned modules, so that this cannot be regarded as a difference from the embodiments of the present disclosure, and that any hardware functional structure involving the establishment of the same logical relationship as the embodiments of the present disclosure is within the scope of protection of the present disclosure.

It can be understood that the vehicle-mounted payment control system in this embodiment of the present disclosure may be an intelligent integrated payment control system or a mobile terminal system communicatively connected to a vehicle device. The present disclosure does not specifically limit a physical implementation form of the vehicle-mounted payment control system.

The schematic function modules of the system and the application scenarios described in the embodiments of the present disclosure are for more clearly describing the technical schemes of the embodiments of the present disclosure, and do not constitute a limitation on the technical schemes provided by the embodiments of the present disclosure. Those of ordinary skill in the art may understand that, with evolution of the function modules of the system and emergence of new application scenarios, the technical schemes provided by the embodiments of the present disclosure are also applicable to similar technical problems. Those of ordinary skill in the art may understand that the function modules of the system shown in FIGS. 1 and 2 do not constitute a limitation on the embodiments of the present disclosure, and may include more or fewer modules than illustrated, or some of the modules may be combined, or a different arrangement of the modules may be used.

Based on the above-described schematic diagram of the functional modules of the system, various embodiments of the vehicle-mounted payment control method of the present disclosure are described below.

Referring to FIG. 3, FIG. 3 is a flowchart of a vehicle-mounted control method according to an embodiment of the present disclosure. The vehicle-mounted payment control method is applied to the vehicle-mounted payment control system shown in FIG. 1. The vehicle-mounted payment control method includes, but is not limited to, steps S310, S320, and S330.

At S310, a surrounding environment is scanned to obtain reference picture information.

In this step, an information scanning module scans the surrounding environment to obtain the reference picture information, and sends the reference picture information to an information recognition module. It can be understood that the information scanning module may acquire one or more pieces of reference picture information, and one piece of reference picture information includes at least one piece of two-dimensional code information. It can be understood that in a process of scanning the surrounding environment, the information scanning module may automatically adjust scanning parameters to facilitate acquisition of the reference picture information. Alternatively, a user dynamically adjusts a scanning area of the information scanning module by interacting with the vehicle-mounted payment control system.

In some embodiments, before scanning the surrounding environment to obtain the reference picture information, the information scanning module receives an automatic code scanning payment instruction. In a case that the vehicle user needs to make a payment, when the vehicle is close to a two-dimensional payment code area, the user interacts with the vehicle-mounted payment control system and issues the automatic code scanning payment instruction to the vehicle-mounted payment control system. It should be noted that the automatic code scanning payment instruction may be a function trigger instruction, a voice control instruction, a gesture control instruction, or the like, which is not specifically limited in the present disclosure.

At S320, recognition processing is performed on the reference picture information to obtain a target payment two-dimensional code.

In this step, the information recognition module first receives the reference picture information, then performs recognition processing on the reference picture information to obtain a target payment two-dimensional code, and then sends the target payment two-dimensional code to a payment module for corresponding payment processing. It can be understood that the information recognition module may perform an image pre-processing operation such as image enhancement on a reference picture in a process of scanning and acquiring the reference picture information or recognizing and processing the reference picture information, to improve the accuracy of recognizing the reference picture information.

At S330, payment processing is performed according to the target payment two-dimensional code and preset user information.

In this step, the payment module receives the target payment two-dimensional code, and then performs payment processing according to the target payment two-dimensional code and the preset user information. It can be understood that the preset user information may be information such as a license plate number, or a registered payment account number, and the present disclosure does not specifically limit the preset user information.

According to the vehicle-mounted payment control method of this embodiment of the present disclosure, the vehicle-mounted payment control system automatically scans and recognizes the target payment two-dimensional code, and performs payment processing by using the preset user information automatically filled in, so that the user does not need to manually input the user information, which makes the payment more convenient and practical, and improves user experience. In some payment scenarios with a large passenger flow, using the vehicle-mounted payment control system provided by the embodiment of the present disclosure can improve the efficiency of payment and ease congestion to a certain extent. Some large parking lots with a large traffic flow may suffer congestion due to slow payment, which can be solved to a certain extent by using the vehicle-mounted payment control system. The vehicle-mounted payment control system provided by the embodiment of the present disclosure has a good application prospect.

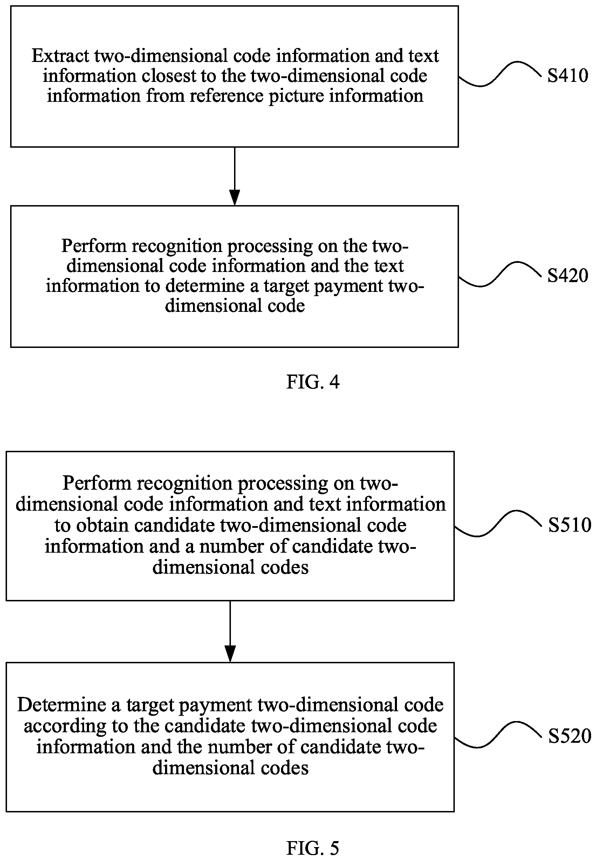

Referring to FIG. 4, FIG. 4 is a flowchart of step S320 in FIG. 3. The performing recognition processing on the reference picture information to obtain a target payment two-dimensional code in S320 includes, but is not limited to, steps S410 and S420.

At S410, two-dimensional code information and text information closest to the two-dimensional code information are extracted from the reference picture information.

In this step, the information recognition module performs extraction processing on the reference picture information, and extracts the two-dimensional code information and the text information closest to the two-dimensional code information. The text information is used to explain a function of the two-dimensional code information. When there are a plurality of pieces of two-dimensional code information extracted, the information recognition module compares the plurality of pieces of two-dimensional code information, filters out repeated two-dimensional code information and its corresponding text information, and obtains two-dimensional code information which does not contain repeated two-dimensional code information, so as to reduce a workload of subsequent recognition and screening processing.

At S420, recognition processing is performed on the two-dimensional code information and the text information to determine the target payment two-dimensional code.

In this step, the information recognition module performs recognition processing on the two-dimensional code information and the text information to determine the target payment two-dimensional code. As two-dimensional codes are widely used in daily life, the two-dimensional code information extracted by the information recognition module from the reference picture information is not necessarily a two-dimensional code related to a payment scene for the user. Therefore, it is necessary to perform recognition processing on the two-dimensional code information and its corresponding text information to determine the target payment two-dimensional code.

Referring to FIG. 5, FIG. 5 is a flowchart of step S420 in FIG. 4. The performing recognition processing on the two-dimensional code information and the text information to determine the target payment two-dimensional code in S420 includes, but is not limited to steps S510 and S520.

At S510, recognition processing is performed on the two-dimensional code information and the text information to obtain candidate two-dimensional code information and a number of candidate two-dimensional codes.

In this step, the information recognition module performs recognition processing on the two-dimensional code information and the text information to obtain the candidate two-dimensional code information and the number of candidate two-dimensional codes. It can be understood that, since one or more pieces of two-dimensional code information and the text information may be acquired from the reference picture information, one or more pieces of candidate two-dimensional code information may be acquired after recognition processing is performed on the two-dimensional code information and the text information.

At S520, the target payment two-dimensional code is determined according to the candidate two-dimensional code information and the number of candidate two-dimensional codes.

In this step, the information recognition module determines the target payment two-dimensional code according to the candidate two-dimensional code information and the number of candidate two-dimensional codes. The information recognition module may perform a limited number of times of recognition processing on the two-dimensional code information and the text information. However, if a unique match item is obtained after recognition processing, it is unnecessary to continue the recognition process to reduce a processing time. Therefore, it is necessary to determine the number of candidate two-dimensional codes, and then proceed to the next step according to a determination result. When the number of candidate two-dimensional codes is equal to 1, the candidate two-dimensional code is determined as the target payment two-dimensional code; or when the number of candidate two-dimensional codes is greater than 1, the target payment two-dimensional code is determined from among the plurality of candidate two-dimensional codes according to a user selection instruction. The user's engagement in the process to determine the target payment two-dimensional code strengthens an interaction with the vehicle-mounted payment control system and the user's personalized service requirements can be met.

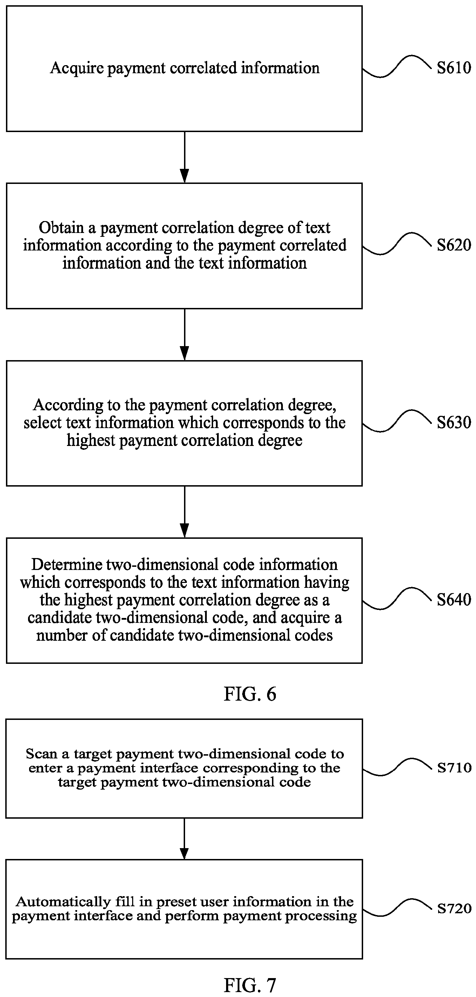

Referring to FIG. 6, FIG. 6 is a flowchart of step S510 in FIG. 5. The performing recognition processing on the two-dimensional code information and the text information to obtain candidate two-dimensional code information and a number of candidate two-dimensional codes in S510 includes, but is not limited to steps S610, S620, S630, and S640.

At S610, payment correlated information is acquired.

In this step, the information recognition module acquires the payment correlated information. The payment correlated information may be first payment correlated information preset in the information recognition module, or may be second payment correlated information sent by the user through interaction with the vehicle-mounted payment control system. It should be noted that the information recognition module may first perform pre-screening according to the first payment correlated information, and then perform a limited number of times of recognition and screening processing according to the second payment correlated information or the second payment correlated information, to improve the accuracy of a recognition and screening result. Alternatively, the information recognition module may perform a limited number of times of recognition and filtering processing according to only the first payment correlated information or the second payment correlated information. It can be understood that the payment correlated information includes, but is not limited to, a payment type and a payment keyword, where the payment type and the payment keyword may be set according to an actual application scenario.

At S620, a payment correlation degree of the text information is obtained according to the payment correlated information and the text information.

In this step, the information recognition module obtains the payment correlation degree of the text information according to the payment correlated information and the text information. Payment correlation degree information, such as a payment type keyword, or a payment scenario keyword is acquired, and the text information and the payment correlation degree information are matched and compared to obtain the payment correlation degree of the text information.

At S630, according to the payment correlation degree, text information which corresponds to the highest payment correlation degree is selected.

In this step, the information recognition module selects, according to the payment correlation degree, text information which corresponds to the highest payment correlation degree. The payment correlation degrees are sorted to obtain a sorting result of the correlation degrees, and the text information corresponding to the highest payment correlation degree is selected according to the sorting result of the correlation degrees.

At S640, two-dimensional code information which corresponds to the text information having the highest payment correlation degree is determined as the candidate two-dimensional code, and the number of candidate two-dimensional codes is acquired.

In this step, the information recognition module determines the two-dimensional code information which corresponds to the text information having the highest payment correlation degree as the candidate two-dimensional code, and acquires the number of candidate two-dimensional codes. It can be understood that there may be one or more pieces of text information having the highest payment correlation degree, and there may also be one or more corresponding candidate two-dimensional codes.

Referring to FIG. 7, FIG. 7 is a flowchart of step S330 in FIG. 3. The performing payment processing according to the target payment two-dimensional code and preset user information in S330 includes, but is not limited to, steps S710 and S720.

At S710, the target payment two-dimensional code is scanned to enter a payment interface corresponding to the target payment two-dimensional code.

In this step, after receiving the target payment two-dimensional code, the payment module scans the target payment two-dimensional code to enter the payment interface corresponding to the target payment two-dimensional code.

At S720, the preset user information is automatically filled in the payment interface and payment processing is performed.

In this step, the payment module automatically fills in the preset user information in the payment interface and performs payment processing. It can be understood that the preset user information includes, but is not limited to, information such as a user license plate number or a registered payment account number. In the payment interface, the information filled in the payment interface is verified, and when the information in the payment interface is complete and the verification succeeds, the payment processing is automatically confirmed to improve the efficiency of vehicle-mounted payment. It should be noted that corresponding payment interfaces displayed after different target payment two-dimensional codes are scanned are also different, and user information to be filled in different payment interfaces is also different. It can be understood that the preset user information cannot meet information filling requirements of all payment interfaces. In some cases, only automatically filling in the preset user information in the payment interface cannot make information of the payment interface complete. Therefore, in some embodiments, the automatically filling in the preset user information in the payment interface in S720 further includes: receiving an information correction notification sent by the payment interface after the preset user information is automatically filled in the payment interface; receiving user-corrected information which is input according to the information correction notification; and filling in the user-corrected information in the payment interface. After automatically filling in the preset user information in the payment interface, the payment module receives the information correction notification sent by the payment interface, then displays the information correction notification to the user to prompt the user to input the user-corrected information, and after receiving the user-corrected information input by the user, fills in the user-corrected information in the payment interface to complete information filling in the payment interface. The payment module can further store the user-corrected information to update the preset user information, so that when the same payment scenario is encountered, relevant information can be automatically filled in for payment processing. This continuously improves the adaptability of the vehicle-mounted payment control system and improves the user experience.

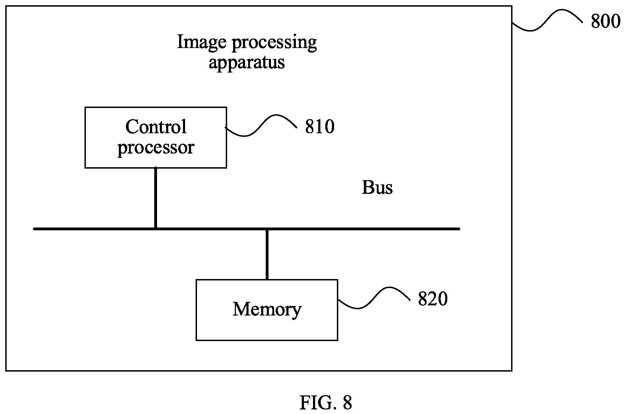

Referring to FIG. 8, FIG. 8 is a schematic diagram of a vehicle-mounted payment control device according to an embodiment of the present disclosure. The vehicle-mounted payment control device 800 of this embodiment of the present disclosure includes at least one control processor 810 and memory 820. In FIG. 8, one control processor 810 and one memory 820 are shown as an example. The control processor 810 and the memory 820 may be connected by a bus or in other ways. In FIG. 8, the connection is realized by a bus for example.

As a non-transitory computer-readable storage medium, the memory 820 may be configured to store a non-transitory software program and a non-transitory computer-executable program. In addition, the memory 820 may include a high-speed random access memory and a non-transitory memory, for example, at least one magnetic disk storage device, a flash memory device, or another non-transitory solid-state storage device. In some implementations, the memory 820 may optionally include memories 820 remotely located with respect to the control processor 810, and these remote memories 820 may be connected to the vehicle-mounted payment control device 800 via a network. Examples of the above-mentioned network include, but are not limited to, the Internet, an intranet, a local area network, a mobile communication network, and a combination thereof.

It can be understood by those of ordinary skill in the art that the device structure shown in FIG. 8 does not constitute a limitation to the vehicle-mounted payment control device 800, and more or fewer components, or a combination of certain components, or a different component arrangement is possible.

Non-transient software programs and instructions required to realize the vehicle-mounted payment control method applied to the vehicle-mounted payment control device 800 in the above embodiment are stored in the memory 820, and when executed by the control processor 810, execute the vehicle-mounted payment control method applied to the vehicle-mounted payment control device 800 in the above embodiment, for example, execute the above-described method steps S310 to S330 in FIG. 3, S410 and S420 in FIG. 4, S510 and S520 in FIG. 5, S610 to S640 in FIG. 6, and S710 and S720 in FIG. 7.

The apparatus embodiments described above are only for illustration. The units described as separate components may or may not be physically separated, that is, they may be located at one place or distributed to multiple network units. Some or all of the modules can be selected according to actual needs to achieve the purpose of the scheme of this embodiment.

Furthermore, an embodiment of the present disclosure also provides a computer-readable storage medium which stores computer-executable instructions which, when executed by one or more control processors, for example, the control processor 810 shown in FIG. 8, can cause the one or more control processors 810 to execute the control method in the above method embodiment, for example, execute the above-described method steps S310 to S330 in FIG. 3, S410 and S420 in FIG. 4, S510 and S520 in FIG. 5, S610 to S640 in FIG. 6, and S710 and S720 in FIG. 7.

An embodiment of the present disclosure includes the following: A vehicle-mounted payment control system scans a surrounding environment to obtain reference picture information; performs recognition processing on the reference picture information to obtain a target payment two-dimensional code; and then performs payment processing according to the target payment two-dimensional code and preset user information. According to the scheme of the embodiment of the present disclosure, the vehicle-mounted payment control system scans the surrounding environment to obtain the reference picture information, then performs recognition processing on the reference picture information to determine the target payment two-dimensional code, and performs payment processing according to the target payment two-dimensional code and the preset user information. In other words, according to the scheme of the embodiment of the present disclosure, the vehicle-mounted payment control system automatically scans and recognizes the target payment two-dimensional code, and performs the payment processing by using the preset user information automatically filled in, so that a user does not need to manually input the user information, which makes the payment more convenient and practical, and improves user experience.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

The above is a detailed description of some embodiments of the present disclosure, but the present disclosure is not limited to the above-mentioned embodiments. Those of ordinary skill in the art can also make various equivalent modifications or replacements without departing from the scope of the present disclosure, and these equivalent modifications or replacements are all included in the scope defined by the claims of the present disclosure.

## Claims

1. A vehicle-mounted payment control method, applied to a vehicle-mounted payment control system, comprising:
scanning a surrounding environment to obtain reference picture information;
performing recognition processing on the reference picture information to obtain a target payment two-dimensional code; and
performing payment processing according to the target payment two-dimensional code and preset user information.

2. The vehicle-mounted payment control method according to claim 1, wherein the reference picture information comprises at least one piece of two-dimensional code information, and the performing recognition processing on the reference picture information to obtain a target payment two-dimensional code comprises:
extracting two-dimensional code information and text information closest to the two-dimensional code information from the reference picture information; and
performing recognition processing on the two-dimensional code information and the text information to determine the target payment two-dimensional code.

3. The vehicle-mounted payment control method according to claim 2, wherein the performing recognition processing on the two-dimensional code information and the text information to determine the target payment two-dimensional code comprises:
performing recognition processing on the two-dimensional code information and the text information to obtain candidate two-dimensional code information and a number of candidate two-dimensional codes; and
determining the target payment two-dimensional code according to the candidate two-dimensional code information and the number of candidate two-dimensional codes.

4. The vehicle-mounted payment control method according to claim 3, wherein the determining the target payment two-dimensional code according to the candidate two-dimensional code information and the number of candidate two-dimensional codes comprises:
in response to the number of candidate two-dimensional codes being equal to 1, determining the candidate two-dimensional code as the target payment two-dimensional code;
or
in response to the number of candidate two-dimensional codes being greater than 1, determining the target payment two-dimensional code from among the plurality of candidate two-dimensional codes according to a user selection instruction.

5. The vehicle-mounted payment control method according to claim 3, wherein the performing recognition processing on the two-dimensional code information and the text information to obtain candidate two-dimensional code information and a number of candidate two-dimensional codes comprises:
acquiring payment correlated information;
obtaining a payment correlation degree of the text information according to the payment correlated information and the text information;
selecting text information which corresponds to the highest payment correlation degree according to the payment correlation degree; and
determining two-dimensional code information which corresponds to the text information having the highest payment correlation degree as the candidate two-dimensional code, and acquiring the number of candidate two-dimensional codes.

6. The vehicle-mounted payment control method according to claim 1, wherein the performing payment processing according to the target payment two-dimensional code and preset user information comprises:
scanning the target payment two-dimensional code to enter a payment interface corresponding to the target payment two-dimensional code; and
automatically filling in the preset user information in the payment interface and performing payment processing.

7. The vehicle-mounted payment control method according to claim 6, wherein the automatically filling in the preset user information in the payment interface further comprises:
receiving an information correction notification sent by the payment interface after the preset user information is automatically filled in the payment interface;
receiving user-corrected information which is input according to the information correction notification; and
filling in the user-corrected information in the payment interface.

8. A vehicle-mounted payment control system, comprising:
an information scanning module, configured to scan a surrounding environment to obtain reference picture information;
an information recognition module, configured to perform recognition processing on the reference picture information to obtain a target payment two-dimensional code; and
a payment module, configured to perform payment processing according to the target payment two-dimensional code and preset user information.

9. A vehicle-mounted payment control device, comprising: a memory, a processor, and a computer program stored in the memory and executable by the processor, wherein the computer program, when executed by the processor, causes the processor to implement the vehicle-mounted payment control method of any one of claims 1 to 7.

10. A computer-readable storage medium storing computer-executable instructions, wherein the computer-executable instructions are configured for implementation of the vehicle-mounted payment control method of any one of claims 1 to 7.
